# EUROPÄISCHE PATENTANMELDUNG

(11) **EP 1 342 433 A1**
(43) Veröffentlichungstag der Anmeldung: **10.09.2003**
(21) Anmeldenummer: 02004982.1
(22) Anmeldetag: 06.03.2002
(51) Int. Cl.: A47C 3/30, A47B 9/10, F16F 9/18, F16F 9/50

(54) **Hyrauliches-Verstellelement**

(71) Anmelder: Schäfer, Klaus, 56751 Polch (DE)
(72) Erfinder:
(74) Vertreter: Moesta, Georg

(57) **Zusammenfassung**

Das Hydrauliche-Verstellelement, ist eine Mehrkammer-Konstruktion, diese besteht aus dem Aussenzylinderrohr 31 in dem das Innenzylinderrohr 10.a konzentrisch angeordnet ist, in diesem Innenzylinderrohr 10.a ist das Kolbenrohr 5, mit dem Kolben 12 als bewegliches Element geführt. Im Unterenteil des Aussenzylinderrohr 31, ist eine mechanische Schraubfeder als Energiespeicher eingebaut, diese Schraubfeder wird mit dem Doppelttassenkolben 25 vorgespannt und dient der eigentlichen Höhenverstellung. Die Höhenverstellung wird mit der Steuerplatte 23 individuell gesteuert.

Das Hydrauliche-Verstellelement ist zum Einsatz für Bürodrehstühle konzipiert, damit bei dem Aufsitzen keine Schäden an der Wirbelsäule entstehen können, schiebt sich der Führungskolben 7 mit dem Innenzylinder 10.a und dem Führungskolben 20 bis zum Anschlag und Sicherungsring 11, es schiebt sich auch der Doppeltassenkolben 25 gegen die Schraubfeder 27 so das eine Einfederung erfolgt. Die Kraftübersetzung zwischen dem Kolbenrohr 5 mit dem Kolben 12 auf den Doppeltassenkolben 25 wird mit einem Hydrauliköl vollzogen.

## Beschreibung

Die Erfindung bezieht sich auf ein Hydrauliches-Verstellelement, welches durch eine besondere Steuervorrichtung individuell in jeder der Höhen verstellt werden kann. Die Konstruktion des Hydraulichen-Verstellelement besteht aus einem Aussenzylinderrohr 31, in diesem Aussenzylinderrohr 31 sind mit dem Führungskolben 7 und dem Führungskolben 20, das Innenzylinderrohr 10.a konzenterich angeordnet. In dem Innenzylinderrohr 10.a wird das Kolbenrohr 5 mit dem Kolben 12 gefüttert. Der Kolben 12 ist ausgebildet als Dichtungsträger für die Nutringmanschette 13 und die Nutringmanschette 17. Bei der Höhen Verstellung dichtet die Nutringmanschette 13 an der Innenwand des Innenzylinderrohr das Hydraulikoel ab, die Nutringmanschette 17 dichtet das Hydraulikoel an dem Steuerrohr 9 ab. Drückt man mit einer gewissen Kraft auf den Quadratstahl 1 dann schiebt dieser, in das Steuerrohr 9 welches am oberen Ende mit einer Drehhülse 6 versehen ist, diese Drehhülse hat zur Aufnahme des Quadratstrahl 1 einen Innenvierkant, bei dem einschiebe Vorgang von dem Quadratstahl 1 in das Steuerrohr 9, es wird der Quardrahtstahl 1 über Kurve in der Steuerhülse 3, in eine Drehbewegung versetzt, diese Drehbewegung mit der Drehhülse 6 auf das Steuerrohr 9 übertragen und auch auf die Steuerplatte 23 denn das Steuerrohr 9 und die Steuerplatte 23 sind fest mit einander verbunden, somit werden die Steuerbohrungen 22 und 24 über einander gestellt, es kann nun das Hydraulikoel von dem Volumenraum 33 des Innenzylinderrohr 10.a in den Volumenraum 32 strömen und auch in umgekehrter Richtung. die Steuerplatten 23 wird durch eine Schraubfeder 34, wieder in die Ausgangs und Verschlußstellung gebracht, strömt das Hydraulikoel bei der Übereinanderstellung, der beiden Steuerbohrung 22 und 24 von dem Volumenraum 33 in dem größeren Volumenraum 32, dann wird der Doppeltassenkolben, der mit der Schraubfeder 27 als Energiespeicher unterstützt ist, zu der Verschlußplatte 28 hin bewegt und zwar bis das, dass Kolbenrohr 5 auf dem Führungskolben 20 anschlägt oder durch die Steuerplatten 23 werden die Steuerbohrungen 22 und 24 verschlossen, dann bleibt das Kolbenrohr 5 mit dem Kolben 12 in jeder Individuelleinstellung und einschiebbar stehen. Wird das Kolbenrohr 5 mit einer gewissen Kraft "F" belastet dann schiebt sich bei verschlossener Steuerbohrung 22 und 24 der Führungskolben 7 mit Innenzylinderrohr 10.a, dem Führungskolben 20 und dem Doppeltassenkolben 25, in dem Aussenzylinderrohr 31 hin zur Verschlußplatte 28 wo bei die Schraubfeder 27 dann als Einfederungselement dient, dieser Einfederungsvorgang wird durch den Anschlagring 11 begrenzt, wird die Kraft "F" die diesen Einfederungsvorgang erzeugt, entfernt dann schiebt die Schraubfeder 27 das ganze Innenleben des Hydraulichen Verstellelement, in die Ausgansposition zurück und bis zu dem Sicherungsring 8. Dieses neue Hydrauliche-Verstellelement ist, besonders für Bürostühle und Bürotische gedacht.

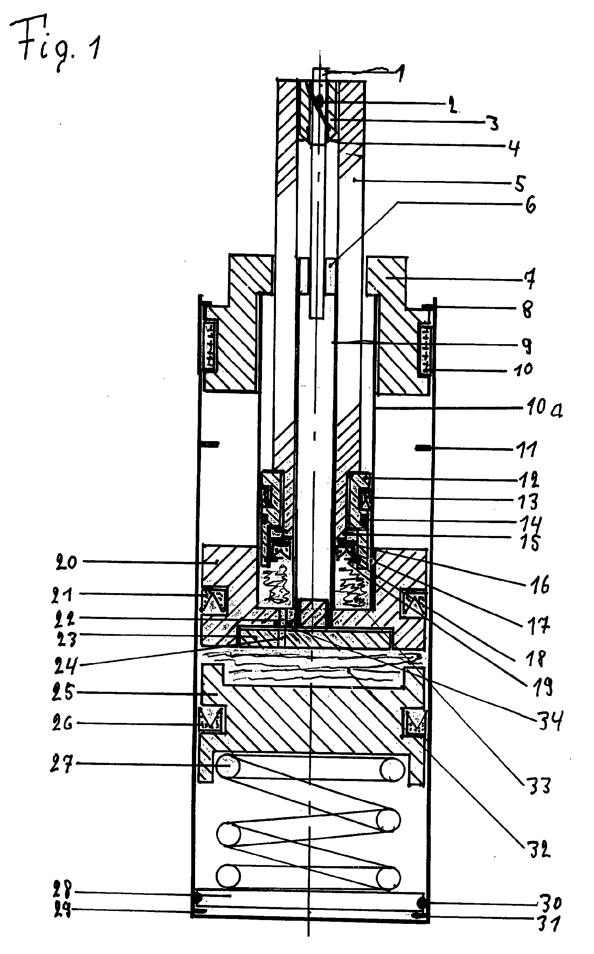

## Patentansprüche

1. Anspruch kennzeichnet das Hydrauliche- Verstellelement, darin dahin das es ein geschlossenes System ist, welches aus dem Aussenzylinderrohr 31 mit dem Konzentrich angeordneten Innenzylinderrohr 10.a, dem Kolbenrohr 5 mit dem Kolben 12 den Führungskolben 7 und 20 besteht.

2. Anspruch. In Anspruch 2. wird dargestellt das der Doppeltassenkolben 25 auf Schraubfeder 27 sitzt, und diesen bei der Verstellung des Kolbenrohr 5 zusammen drückt.

3. Anspruch. Im Anspruch 3. ist erläutert, das in der Steuerplatte 23 sowie in dem Führungskolben 20, die Steuerbohrungen 22 und 24 angebracht sind, die durch Verdrehung der Steuerplatte 23 geschlossen oder geöffnet werden können.

4. Anspruch. Kennzeichnet das Steuerrohr 9 welches mit der Steuerplatte 23 fest verbunden ist, in dem Steuerrohr 9 ist der Quadratstahl 1 als Bedienungselement, mit der Drehhülse 6 geführt.

5. Anspruch. Der zeigt an das im Oberteil des Kolbenrohr 5, die Steuerhülse 3 mit dem Anschlagring 4 montiert sind, die Steuerhülse 3 ist mit einer Kurvenbahn ausgestattet, diese Kurvenbahn an der Steuerhülse 3, bewirkt die Umsetzung von der Linearenbewegung, des Steuerrohr 9 mit der Steuerplatte 23.

6. Anspruch. Mit den Nutringmanschetten 13. 17. 21. 26. wird die Abdichtung des Doppeltassenkolben 25 sowie den Führungskolben 7 und 20 aufgezeigt, es wird auch die Abdichtung des Kolben 12 mit der Nutringmanschette dargestellt.

7. Anspruch. Zeigt an die Verschlußplatte 28 mit dem Dichtring 30 und den Sicherungsring 29 auf dieser Verschlußplatte 28 stütz sich die Schraubfeder 27 ab, der Dichtring 30 verhindert gegebenenfalls das Hydrauliköl nach außen austritt.

8. Anspruch. Der Führungskolben 7 ist so ausgebildet, das er zur Aufnahme des Innenzylinderrohr 10.a dient, für die Anschlagstellung des Kolben 12 und als Führung für das Kolbenrohr 5.

9. Anspruch. Wird dargestellt zur Abdichtung der Steuerbohrung 22 und 24, in dem Führungskolben an der Steuerbohrung ist der Dichtring 34 eingesetzt, so das bei der Verschlußstellung der Steuerbohrung 22 und 24 kein Hydrauliköl von dem Volumenraum 33 des Innenzylinderrohr 10.a in den Volumenraum 32 des Aussenzylinderrohr 31 strömen kann.
